# EUROPEAN PATENT SPECIFICATION

(11) **EP 2 536 219 B1**
(45) Date of publication and mention of the grant of the patent: **24.10.2018**
(21) Application number: 11741897.0
(22) Date of filing: 31.01.2011
(51) Int. Cl.: H04W 4/70, H04W 12/08, H04L 12/12, H04L 12/40

(54) **ACCESS CONTROL METHOD, NETWORK ENTITY AND ACCESS CONTROL SYSTEM**
ZUGANGSSTEUERUNGSVERFAHREN, NETZWERKEINHEIT UND ZUGANGSSTEUERUNGSSYSTEM
PROCÉDÉ DE COMMANDE DE RÉCEPTION, UNITÉ RÉSEAU ET SYSTÈME DE COMMANDE DE RÉCEPTION

(30) Priority: 12.02.2010 CN 201010113540
(43) Date of publication of application: 19.12.2012
(73) Proprietor: Huawei Technologies Co., Ltd., Longgang District Shenzhen, Guangdong 518129 (CN)
(72) Inventor: GUO, Xiaolong, Shenzhen Guangdong Province 518129 (CN)
(74) Representative: Pfenning, Meinig & Partner mbB
(86) International application number: PCT/CN2011/070867
(87) International publication number: WO 2011/098026

(56) References cited:
- CN-A- 101 079 775
- SAMSUNG: "MTC Feature subscription and activation/deactivation", 3GPP DRAFT; S2-100688-NIMTC-SUBSCRIPTION_ACTIVATION V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 20 January 2010 (2010-01-20), XP050433116, [retrieved on 2010-01-20]
- SAMSUNG: "MTC Feature subscription and activation/deactivation", 3GPP DRAFT; S2-100196-NIMTC-SUBSCRIPTION_ACTIVATION V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 12 January 2010 (2010-01-12), XP050432796, [retrieved on 2010-01-12]
- "3rd Generation Partnership Project; Technical Specification Group Services and System Aspects; Service requirements for machine-type communications; Stage 1 (Release 10)", 3GPP STANDARD; 3GPP TS 22.368, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.1, 11 December 2009 (2009-12-11), pages 1-23, XP050400696, [retrieved on 2009-12-11]
- CMCC: "MTC Features, RAN Enhancements and Related Procedures", 3GPP DRAFT; R2-100383 MTC FEATURES RAN ENHANCEMENTS AND RELATED PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050421046, [retrieved on 2010-01-12]
- CHINA MOBILE COMMUNICATIONS CO. ET AL. CHINA MOBILE COMMUNICATIONS ENTERPRISE STANDARD-INTERFACE SPECIFICATION FOR MACHINE TO MACHINE (M2M) SERVICE January 2009, XP008170619
- YE ET AL.: 'The Research and Realization of M2M Terminal Management system.' CHINESE MASTER'S THESES FULL-TEXT DATABASE-INFORMATION SCIENCE AND TECHNOLOGY. 15 December 2009, pages 1138 - 1194, XP008163900
- GUO, YONGCAI ET AL.: 'The Design and Realization of M2M Terminal Management Platform.' CHINESE JOURNAL OF SCIENTIFIC INSTRUMENT. vol. 29, no. 8, August 2008, pages 213 - 216, XP008160511

## Description

### FIELD OF THE INVENTION

The present invention relates to communication technologies, and in particular, to an access control technology.

### BACKGROUND OF THE INVENTION

M2M (machine to machine, machine to machine) is an abbreviation for machine to machine communication. In a broad sense, there may be the following three modes, machine to machine, machine to mobile phone (for example, user remote monitoring), and mobile phone to machine (for example, user remote control).

In an M2M-based mobile communication network, user equipments managed by the network may be various user equipments, which are called MTC Devices (Machine Type Communications Device, machine type communications device), for example, vending machines, water/watt-hour meters used for remote meter reading or alarming, and home appliances.

The MTC devices have some MTC features (MTC feature). The MTC features may be activated or deactivated by an MTC Subscriber (MTC subscriber).

In the prior art, the communication network cannot correctly activate the MTC features of the MTC devices and cannot access the MTC devices properly. This may cause communication errors.

3GPP TSG SA WG2 Meeting #77 TD S2-100688 discloses that MTC feature can be considered as two aspects: 1) MTC feature subscription and 2) MTC feature activation/deactivation.

3GPP TSG SA WG2 Meeting #77 TD S2-100196 also discloses that MTC feature can be considered as two aspects: 1) MTC feature subscription and 2) MTC feature activation/deactivation.

3GPP TS 22.368 vl.1.1 discloses sixteen features for MTC.

3GPP TSG-RAN WG2 Meeting #68 bis RS-100383 discloses that MTC features are offered on a presubscription basis, and can be individually activated.

### SUMMARY OF THE INVENTION

Embodiments of the present invention provide an access control method, apparatus, and system, which can enable a communication network to correctly activate MTC features of MTC devices and access the MTC devices properly. This solves the problem in the prior art that the MTC features of the MTC devices cannot be correctly activated, which causes communication errors.

According to the first aspect of the present invention an access control method includes: obtaining a feature of a machine type communications (MTC) device and feature category information of the feature, where the feature category information of the feature of the MTC device includes a first feature category or a second feature category; if the feature of the MTC device belongs to the first feature category, allowing access of the MTC device to a network when the feature of the MTC device is activated, and denying access of the MTC device to the network when the feature of the MTC device cannot be activated; and if the feature of the MTC device belongs to the second feature category, controlling access of the MTC device according to at least one of subscription information of the MTC device, network capability, and MTC device capability.

According to another aspect of the present invention a network entity includes:
an obtaining module, configured to obtain a feature of a machine type communications (MTC) device and feature category information of the feature, where the feature category information of the feature of the MTC device includes a first feature category or a second feature category; and
an access controlling module, configured to: after the obtaining module obtains the feature of the MTC device and the feature category information of the feature, and if the feature of the MTC device belongs to the first feature category, allow access of the MTC device to a network when the feature of the MTC device is activated, and deny access of the MTC device to the network when the feature of the MTC device cannot be activated; and
if the feature of the MTC device belongs to the second feature category, control access of the MTC device according to at least one of subscription information of the MTC device, network capability, and MTC device capability.

According to still another aspect of the present invention an access control system includes: a network side network element and a machine type communications (MTC) device that is connected to the network side network element in a communicative manner. The network side network element is configured to: obtain a feature of the MTC device and feature category information of the feature, where the feature category information of the feature of the MTC device includes a first feature category or a second feature category; if the feature of the MTC device belongs to the first feature category, allow access of the MTC device to a network when the feature of the MTC device is activated, and deny access of the MTC device to the network when the feature of the MTC device cannot be activated; and if the feature of the MTC device belongs to the second feature category, control access of the MTC device according to at least one of subscription information of the MTC device, network capability, and MTC device capability.

According to the embodiments of the present invention, the communication network can correctly activate the MTC feature of the MTC device and properly control the access of the MTC device.

### BRIEF DESCRIPTION OF THE DRAWINGS

FIG. 1 is a flowchart of an access control method according to an embodiment of the present invention;
FIG. 2 is a flowchart of another access control method according to an embodiment of the present invention;
FIG. 3 is a schematic structural diagram of a network entity according to an embodiment of the present invention; and
FIG. 4 is a schematic structural diagram of an access control system according to an embodiment of the present invention.

### DETAILED DESCRIPTION OF THE EMBODIMENTS

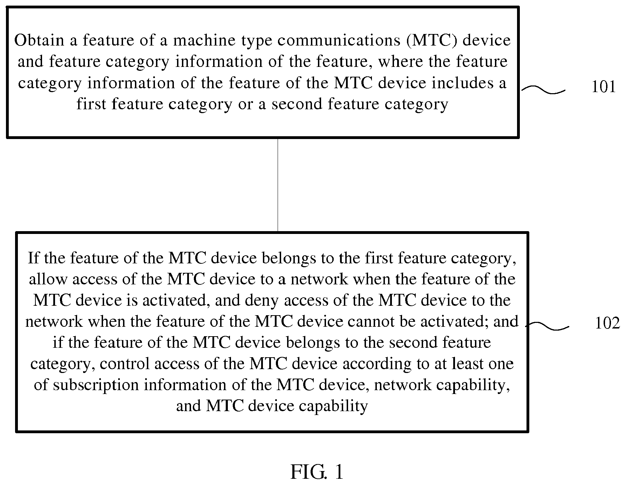

An access control method according to an embodiment of the present invention is described in detail with reference to FIG. 1. As shown in FIG. 1, the method includes:
Step 101: Obtain a feature of a machine type communications (MTC) device and feature category information of the feature, where the feature category information of the feature of the MTC device includes a first feature category or a second feature category.
Step 102: If the feature of the MTC device belongs to the first feature category, allow access of the MTC device to a network when the feature of the MTC device is activated, and deny access of the MTC device to the network when the feature of the MTC device cannot be activated; and
   if the feature of the MTC device belongs to the second feature category, control access of the MTC device according to at least one of subscription information of the MTC device, network capability, and the MTC device capability.

The first feature category may be referred to as a fixed MTC feature (Fixed MTC Feature) and the second feature category may be referred to as a flexible MTC feature (Flex MTC Feature).

Further, an MTC device having only a Fixed MTC Feature may be referred to as a simplified MTC device (Simplified MTC Device). The Fixed MTC Feature cannot be deactivated. For example, MTC features such as low mobility, time controlled, and MO Only of a water meter may be referred to as Fixed MTC Features. An MTC device having only a Flex MTC Feature may be referred to as a complex MTC device (Complex MTC Device). The Flex MTC Feature may be deactivated. If all MTC Features of a Complex MTC Device are deactivated, the complex MTC device becomes a common user equipment. An MTC device having both a Fixed MTC Feature and a Flex MTC Feature may be referred to as a mixed MTC device (Mixed MTC Device).

The following are examples of some features of an MTC device: Low Mobility (low mobility), Time Controlled (time controlled), Time Tolerant (time tolerant), Packet Switched (PS) Only (packet switched only), Low Data Usage (low data usage), Group Based (ground based), Mobile Originated Only (mobile originated only), Offline Indication (offline indication), Jamming Indication (jamming indication), MTC Monitoring (MTC monitoring), Extra Low Power Consumption (extra low power consumption), Priority Alarm Message (PAM) (priority alarm message), Location Specific Trigger (location specific trigger), and Secure Connection (secure connection).

In an embodiment, the category of the feature of the MTC device may be configured by an operator or a device manufacturer, or the category of the feature of the MTC device may be determined by a user during subscription. For example, the operator may determine the Low Mobility (low mobility) feature or the Mobile Originated Only (mobile originated only) feature as the first feature category in a network, and may also determine the Low Mobility feature or the Mobile Originated Only feature (mobile originated only) as the second feature category in another network.

According to the embodiments of the present invention, a communication network can correctly activate the MTC feature of the MTC device and properly access the MTC device.

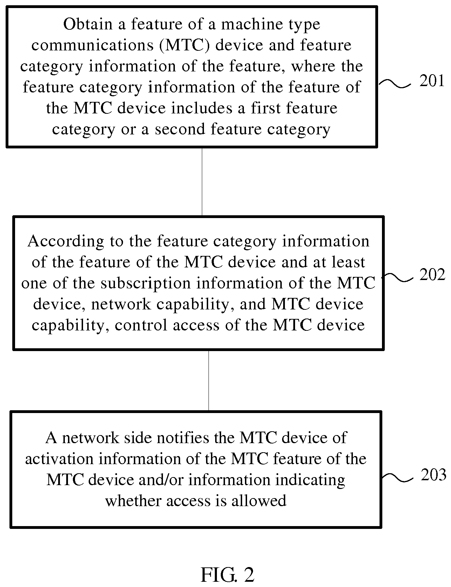

An access control method according to an embodiment of the present invention is described with reference to FIG. 2. As shown in FIG. 2, the method includes:
Step 201: Obtain feature category information of a feature of a machine type communications (MTC) device, where the feature category information of the feature of the MTC device includes a first feature category or a second feature category.

The first feature category is used to indicate that access of the MTC device to a network is allowed when a feature belonging to the first feature category is activated, and that access of the MTC device to the network is denied when the feature belonging to the first feature category cannot be activated.

The second feature category is used to indicate that access of the MTC device is controlled according to at least one of subscription information of the MTC device, network capability, and MTC device capability if the feature of the MTC device belongs to the second feature category.

The first feature category may be referred to as a fixed MTC feature (Fixed MTC Feature), and the second feature category may be referred to as a flexible MTC feature (Flex MTC Feature).

Further, an MTC device having only a Fixed MTC Feature may be referred to as a simplified MTC device (Simplified MTC Device). The Fixed MTC Feature cannot be deactivated. For example, MTC features such as low mobility, time controlled, and MO Only of a water meter may be referred to as Fixed MTC Features. An MTC device having only a Flex MTC Feature may be referred to as a complex MTC device (Complex MTC Device). The Flex MTC Feature may be deactivated. If all MTC Features of a Complex MTC Device are deactivated, the complex MTC device becomes a common user equipment. An MTC device having both a Fixed MTC Feature and a Flex MTC Feature may be referred to as a mixed MTC device (Mixed MTC Device).

The feature category information of the feature of the machine type communications (MTC) device may be obtained by receiving capability information reported by the MTC device, where the capability information includes the feature of the MTC device and the feature category information of the feature. Specifically, the step of receiving the capability information reported by the MTC device may be as follows: During access of the MTC device, the MTC device carries the MTC feature of the MTC device and the feature category information of the feature in an Attach Request (attach request) or in another message, or places the MTC feature and the feature category information of the feature in a field of the capability of the MTC device or in the form of a bitmap. For example, a first bit indicates the Flex MTC Feature, and a second bit indicates the Fixed MTC Feature; or a first bit is 0, which indicates that the Fixed MTC Feature or the Flex MTC Feature is supported, while a first bit is 1, which indicates the contrary.

Alternatively, the feature category information of the feature of the machine type communications (MTC) device may also be obtained by obtaining subscription information of the MTC device according to an identifier of the MTC device, where the subscription information includes the feature of the MTC device and the feature category information of the feature. Specifically, a core network element itself may store the feature of the MTC device and the feature category information of the feature, and may also obtain the feature of the MTC device and the feature category information of the feature from an EIR (Equipment Identification Register, equipment identification register) or an HSS (Home Subscriber Server, home subscriber server) through the identifier of the MTC device.

Alternatively, the feature category information of the feature of the machine type communications (MTC) device may also be obtained by receiving capability information reported by the MTC device, where the capability information includes the feature of the MTC device; and by obtaining subscription information of the MTC device according to the identifier of the MTC device, where the subscription information includes the feature category information of the MTC device.

Step 202: According to the feature category information of the feature of the MTC device and at least of the subscription information of the MTC device, network capability, and MTC device capability, control access of the MTC device.

Specifically, after a network side receives the capability information reported by the MTC device in step 201, if it is determined that the feature of the MTC device belongs to the Fixed MTC Feature, the feature of the MTC device is not activated and access of the MTC device to the network is denied when it is determined that a network entity does not support the feature of the MTC device or the subscription information of the MTC device indicates that the MTC feature is not supported; and the feature of the MTC device is activated when it is determined that the network entity supports the feature of the MTC device and/or the subscription information of the MTC device allows activation of the feature of the MTC device.

Specifically, after the subscription information of the MTC device is obtained according to the identifier of the MTC device in step 201, if it is determined that the feature of the MTC device belongs to the Fixed MTC Feature, the feature of the MTC device is not activated and access of the MTC device is denied when the network entity or the MTC device does not support the feature of the MTC device, or the subscription information of the MTC device indicates that the feature of the MTC device is not supported; and the feature of the MTC device is activated and access of the MTC device is allowed when the network entity and the MTC device support the feature of the MTC device.

Specifically, when it is known that the feature of the MTC device belongs to the Flex MTC Feature, and it is determined that the network capability or the MTC device does not support the feature of the MTC device, the feature of the MTC device is not activated; or when it is determined that the network capability or the MTC device does not support the feature of the MTC device, and the subscription information of the MTC device indicates that the feature of the MTC device needs to be activated, for example, the subscription information indicates that the feature of the MTC device must be activated, access of the MTC device to the network is denied; or when it is determined that the network capability or the MTC device does not support the feature of the MTC device, and the subscription information of the MTC device indicates that it is suggested that the feature of the MTC device need to be activated, the feature of the MTC device is not activated and access of the MTC device to the network is allowed.

The determining that the network does not support the feature of the MTC device may be as follows: when an access network element determines that it does not support the feature of the MTC device, or the access network element acquires, through a first message, that a core network element does not support the feature of the MTC device, the access network element determines that the feature of the MTC device is not supported; or when a core network element determines that it does not support the feature of the MTC device, or the core network element acquires, through a second message, that an access network element does not support the feature of the MTC device, the core network element determines that the feature of the MTC device is not supported. Specifically, the first message may be an S1 setup response message (S1 Setup Response) or a mobility management entity configuration update message (MME Configuration Update); and the second message may be an S1 setup request message (SI Setup Request) or an evolved NodeB configuration update message (eNB Configuration Update). The access network element and core network element may also determine whether the network supports the MTC feature or not by activating an MTC feature or prohibiting activation of an MTC Feature by default.

Alternatively, in step 203, the network side notifies the MTC device of activation information of the MTC feature of the MTC device and/or information indicating whether access is allowed. Specifically, all MTC features that can be activated or cannot be activated may be notified to the MTC device, where specific manners may be a separate signaling or separate field, or a form of a bitmap, so as to enable the MTC device to perform subsequent operations according to the foregoing information.

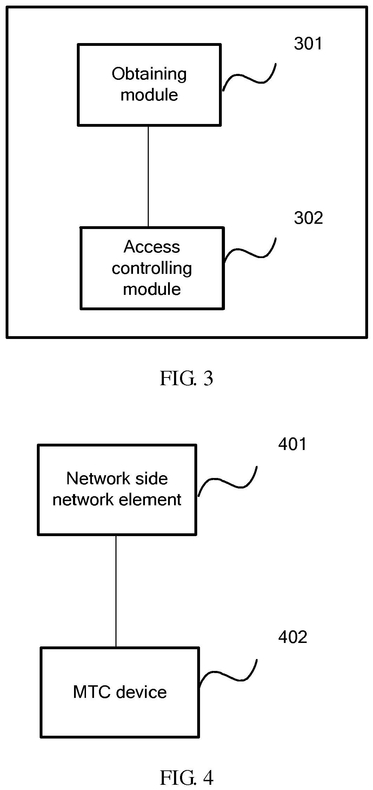

A network entity according to an embodiment of the present invention is described with reference to FIG. 3. The network entity includes:
an obtaining module 301, configured to obtain a feature of a machine type communications (MTC) device and feature category information of the feature, where the feature category information of the feature of the MTC device includes a first feature category or a second feature category; and
an access controlling module 302, configured to: after the obtaining module obtains the feature of the MTC device and the feature category information of the feature, and if the feature of the MTC device belongs to the first feature category, allow access of the MTC device to a network when the feature of the MTC device is activated, and deny access of the MTC device to the network when the feature of the MTC device cannot be activated; and
if the feature of the MTC device belongs to the second feature category, control access of the MTC device according to at least one of subscription information of the MTC device, network capability, and MTC device capability.

The obtaining module 301 includes a receiving unit and/or an obtaining unit.

The receiving unit is configured to receive capability information reported by the MTC device, where the capability information includes the feature of the MTC device and the feature category information of the feature; and/or
the obtaining unit is configured to obtain an identifier of the MTC device, and obtain subscription information of the MTC device according to the identifier of the MTC device, where the subscription information includes the feature of the MTC device and the feature category information of the feature.

The network entity may further include a determining module.

The determining module is configured to: after the receiving unit receives the capability information reported by the MTC device, determine, according to the capability information reported by the MTC device, that the feature of the MTC device belongs to the first feature category, and when it is determined that the network entity does not support the feature of the MTC device or the subscription information of the MTC device prohibits activation of the feature of the MTC device, send first triggering information to the access controlling module 302.

The access controlling module 302 is configured to receive the first triggering information, and deny access of the MTC device to the network without activating the feature of the MTC device.

The determining module is further configured to: after the receiving unit receives the capability information reported by the MTC device, determine, according to the capability information reported by the MTC device, that the feature of the MTC device belongs to the first feature category, and when it is determined that the network entity supports the feature of the MTC device and/or the subscription information of the MTC device allows activation of the feature of the MTC device, send second triggering information to the access controlling module 302.

The access controlling module 302 is configured to receive the second triggering information, activate the feature of the MTC device, and allow access of the MTC device to the network.

Alternatively, the determining module is configured to: after the obtaining unit obtains the subscription information of the MTC device according to the identifier of the MTC device, determine, according to the subscription information of the MTC device, that the feature of the MTC device belongs to the first feature category, and when it is determined that the network entity does not support the feature of the MTC device or the MTC device does not support the feature of the MTC device, send third triggering information to the access controlling module 302.

The access controlling module 302 is configured to receive the third triggering information, and deny access of the MTC device to the network without activating the feature of the MTC device.

The determining module is further configured to: after the obtaining unit obtains the subscription information of the MTC device according to the identifier of the MTC device, determine, according to the subscription information of the MTC device, that the feature of the MTC device belongs to the first feature category, and when it is determined that the network entity and the MTC device support the feature of the MTC device, send fourth triggering information to the access controlling module 302.

The access controlling module 302 is configured to receive the fourth triggering information, activate the feature of the MTC device, and allow access of the MTC device to the network.

For other technical features of the network entity, reference may be made to the foregoing method embodiments, and details are not repeatedly described here.

An access control system according to an embodiment of the present invention is described with reference to FIG. 4. The system includes: a network side network element 401, and a machine type communications (MTC) device 402 that is connected to the network side network element 401 in a communicative manner.

The network side network element 401 is configured to: obtain a feature of the MTC device 402 and feature category information of the feature, where the feature category information of the feature of the MTC device 402 includes a first feature category or a second feature category;
if the feature of the MTC device 402 belongs to the first feature category, allow access of the MTC device 402 to a network when the feature of the MTC device 402 is activated, and deny access of the MTC device 402 to the network when the feature of the MTC device 402 cannot be activated; and
if the feature of the MTC device 402 belongs to the second feature category, control access of the MTC device according to at least one of subscription information of the MTC device 402, network capability, and capability of the MTC device 402.

The network side network element 401 includes an access network element and a core network element.

The access network element is configured to determine that the feature of the MTC device 402 is not supported, so as to determine not to activate the feature of the MTC device 402 and deny access of the MTC device 402 to the network when the access network element determines that the access network element does not support the feature of the MTC device 402, or the access network element acquires, through a first message, that the core network element does not support the feature of the MTC device, the access network element determines; or
the core network element is configured to determine that the feature of the MTC device 402 is not supported, so as to determine not to activate the feature of the MTC device 402 and deny access of the MTC device 402 to the network, when the core network element determines that the access network element does not support the feature of the MTC device 402, or the access network element acquires, through a second message, that the access network element does not support the feature of the MTC device 402.

For other technical features of the foregoing system, reference may be made to the foregoing method embodiments, and details are not repeatedly described here.

Those skilled in the art should understand that, the modules of the apparatus according to the embodiments of the present invention are divided by functions, and an actual specific structure may be a split or a combination of the foregoing function modules.

In the foregoing embodiments of the present invention, the wording "receive" may be construed as actively obtaining information from another unit or receiving information sent by another unit.

The sequence numbers of the foregoing embodiments of the present invention are only for ease of description, but do not denote the preference of the embodiments.

The solutions recorded in the content of the claims are also subject to the scope of the embodiments of the present invention.

It is understandable to persons of ordinary skill in the art that all or part of the processing in the methods according to the foregoing embodiments may be implemented by a program instructing relevant hardware. The program may be stored in a computer readable storage medium.

The foregoing description is merely exemplary embodiments of the present invention, but not intended to limit the scope of the present invention.

## Claims

1. An access control method, comprising:
Obtaining (101) a feature of a machine type communications, MTC, device and feature category information of the feature, wherein the feature category information of the feature comprises a fixed MTC feature category or a flexible MTC feature category;
if (102) the feature of the MTC device belongs to the fixed MTC feature category, allowing access of the MTC device to a network when the feature of the MTC device is activated, or denying access of the MTC device to the network when the feature of the MTC device cannot be activated; and
if (102) the feature of the MTC device belongs to the flexible MTC feature category, controlling access of the MTC device according to at least one of subscription information of the MTC device, network capability, and MTC device capability.

2. The method according to claim 1, wherein
the obtaining the feature of the MTC device and the feature category information of the feature comprises:
receiving capability information reported by the MTC device, wherein the capability information comprises the feature of the MTC device and the feature category information of the feature; or
obtaining an identifier of the MTC device, and obtaining subscription information of the MTC device according to the identifier of the MTC device, wherein the subscription information comprises the feature of the MTC device and the feature category information of the feature.

3. The method according to claim 2, wherein after receiving the capability information reported by the MTC device, the method further comprises:
determining, according to the capability information reported by the MTC device, that the feature of the MTC device belongs to the fixed MTC feature category, not activating the feature of the MTC device when it is determined that a network entity does not support the feature of the MTC device or the subscription information of the MTC device prohibits activation of the feature of the MTC device, and activating the feature of the MTC device when the network entity supports the feature of the MTC device and/or the subscription information of the MTC device allows activation of the feature of the MTC device; or
after obtaining the subscription information of the MTC device according to the identifier of the MTC device, the method further comprises:
determining, according to the subscription information of the MTC device, that the feature of the MTC device belongs to the fixed MTC feature category, not activating the feature of the MTC device when it is determined that a network entity does not support the feature of the MTC device or the MTC device does not support the feature of the MTC device, and activating the feature of the MTC device when it is determined that the network entity and the MTC device support the feature of the MTC device.

4. The method according to claim 1, wherein the controlling access of the MTC device according to at least one of the subscription information of the MTC device, the network capability, and the MTC device capability comprises:
when it is determined that a network entity does not support the feature of the MTC device or the MTC device does not support the feature of the MTC device, not activating the feature of the MTC device; or
when it is determined that a network entity does not support the feature of the MTC device or the MTC device does not support the feature of the MTC device, and the subscription information of the MTC device instructs to activate the feature of the MTC device, denying access of the MTC device to the network; or
when it is determined that a network entity does not support the feature of the MTC device or the MTC device does not support the feature of the MTC device, and the subscription information of the MTC device indicates that it is suggested that the feature of the MTC device need to be activated, allowing access of the MTC device to the network without activating the feature of the MTC device.

5. The method according to claim 3 or 4, wherein the determining that the network entity does not support the feature of the MTC device comprises:
determining, by an access network element, that the feature of the MTC device is not supported, when the access network element determines that the access network element does not support the feature of the MTC device, or the access network element acquires, through a first message, that a core network element does not support the feature of the MTC device; or
determining, by a core network element, that the feature of the MTC device is not supported, when the core network element determines that the core network element does not support the feature of the MTC device, or the core network element acquires that an access network element does not support the feature of the MTC device through a second message.

6. A network entity, comprising:
an obtaining module (301), configured to obtain a feature of a machine type communications, MTC, device and feature category information of the feature, wherein the feature category information of the feature comprises a fixed MTC feature category or a flexible MTC feature category; and
an access controlling module (302), configured to allow access of the MTC device to a network when the feature of the MTC device is activated, and deny access of the MTC device to the network when the feature of the MTC device cannot be activated if the feature of the MTC device obtained by the obtaining module belongs to the fixed MTC feature category,; and
control access of the MTC device according to at least one of subscription information of the MTC device, network capability, and MTC device capability if the feature of the MTC device obtained by the obtaining module belongs to the flexible MTC feature category,.

7. The network entity according to claim 6, wherein the obtaining module (301) comprises a receiving unit and/or an obtaining unit; wherein
the receiving unit is configured to receive capability information reported by the MTC device, wherein the capability information comprises the feature of the MTC device and the feature category information of the feature; and/or
the obtaining unit is configured to obtain an identifier of the MTC device, and obtain subscription information of the MTC device according to the identifier of the MTC device, wherein the subscription information comprises the feature of the MTC device and the feature category information of the feature.

8. The network entity according to claim 7, further comprising a determining module; wherein
the determining module is configured to determine, according to the capability information reported by the MTC device and received by the receiving unit, that the feature of the MTC device belongs to the fixed MTC feature category, and when it is determined that the network entity does not support the feature of the MTC device or the subscription information of the MTC device prohibits activation of the feature of the MTC device, send first triggering information to the access controlling module;
the access controlling module is configured to receive the first triggering information sent by the determining module, and deny access of the MTC device to the network without activating the feature of the MTC device;
the determining module is further configured to determine, according to the capability information reported by the MTC device and received by the receiving unit, that the feature of the MTC device belongs to the fixed MTC feature category, and when it is determined that the network entity supports the feature of the MTC device and/or the subscription information of the MTC device allows activation of the feature of the MTC device, send second triggering information to the access controlling module;
the access controlling module is configured to receive the second triggering information sent by the determining module, activate the feature of the MTC device, and allow access of the MTC device to the network; or
the determining module is configured to determine, according to the subscription information of the MTC device, wherein the subscription information of the MTC device is obtained by the obtaining unit, that the feature of the MTC device belongs to the fixed MTC feature category, and when it is determined that the network entity does not support the feature of the MTC device or the MTC device does not support the feature of the MTC device, send third triggering information to the access controlling module;
the access controlling module is configured to receive the third triggering information sent by the determining module, and deny access of the MTC device to the network without activating the feature of the MTC device;
the determining module is further configured to determine, according to the subscription information of the MTC device, wherein the subscription information of the MTC device is obtained by the obtaining unit, that the feature of the MTC device belongs to the fixed MTC feature category, and when it is determined the network entity and the MTC device support the feature of the MTC device, send fourth triggering information to the access controlling module;
the access controlling module is configured to receive the fourth triggering information sent by the determining module, activate the feature of the MTC device, and allow access of the MTC device to the network.

9. An access control system, comprising: a network side network element (401) and a machine type communications, MTC, device (402) that is connected to the network side network element in a communicative manner; wherein
the network side network element (401) is configured to obtain a feature of the MTC device and feature category information of the feature, wherein the feature category information of the feature comprises a fixed MTC feature category or a flexible MTC feature category;
if the feature of the MTC device belongs to the fixed MTC feature category, allow access of the MTC device to a network when the feature of the MTC device is activated, and deny access of the MTC device (402) to the network when the feature of the MTC device cannot be activated; and
if the feature of the MTC device belongs to the flexible MTC feature category, control access of the MTC device (402) according to at least one of subscription information of the MTC device, network capability, and MTC device capability.

10. The system according to claim 9, wherein the network side network element comprises an access network element and a core network element; wherein
the access network element is configured to determine that the feature of the MTC device is not supported, so as to determine not to activate the feature of the MTC device, and deny access of the MTC device to the network, when the access network element determines that the access network element does not support the feature of the MTC device, or the access network element acquires, through a first message, that the core network element does not support the feature of the MTC device; or
the core network element is configured to determine the feature of the MTC device is not supported, so as to determine not to activate the feature of the MTC device, and deny access of the MTC device to the network, when the core network element determines that the core network element does not support the feature of the MTC device, or the core network element acquires, through a second message, that the access network element does not support the feature of the MTC device.

## Patentansprüche

1. Zugangskontrollverfahren, umfassend:
Erhalten (101) eines Merkmals einer Maschinentypkommunikations(MTC)-Vorrichtung und von Merkmalkategorieinformationen des Merkmals, wobei die Merkmalkategorieinformationen des Merkmals eine unveränderliche MTC-Merkmalkategorie oder eine veränderliche MTC-Merkmalkategorie umfassen;
wenn (102) das Merkmal der MTC-Vorrichtung zur unveränderlichen MTC-Merkmalkategorie gehört, Zulassen des Zugangs der MTC-Vorrichtung zu einem Netzwerk beim Aktivieren des Merkmals der MTC-Vorrichtung, oder Verhindern des Zugangs der MTC-Vorrichtung zu dem Netzwerk, wenn das Merkmal der MTC-Vorrichtung nicht aktiviert werden kann; und
wenn (102) das Merkmal der MTC-Vorrichtung zur veränderlichen MTC-Merkmalkategorie gehört, Steuern des Zugangs der MTC-Vorrichtung gemäß mindestens einem von Abonnementinformationen der MTC-Vorrichtung, Netzwerkfähigkeit und Fähigkeit der MTC-Vorrichtung.

2. Verfahren nach Anspruch 1, wobei
das Erhalten des Merkmals der MTC-Vorrichtung und der Merkmalkategorieinformationen des Merkmals umfasst:
Empfangen der von der MTC-Vorrichtung berichteten Fähigkeitsinformationen, wobei die Fähigkeitsinformationen das Merkmal der MTC-Vorrichtung und die Merkmalkategorieinformationen des Merkmals umfassen; oder
Erhalten einer Kennung der MTC-Vorrichtung und Erhalten von Abonnementinformationen der MTC-Vorrichtung gemäß der Kennung der MTC-Vorrichtung, wobei die Abonnementinformationen das Merkmal der MTC-Vorrichtung und die Merkmalkategorieinformationen des Merkmals umfassen.

3. Verfahren nach Anspruch 2, wobei das Verfahren nach dem Empfangen der von der MTC-Vorrichtung berichteten Fähigkeitsinformationen weiterhin umfasst:
Bestimmen gemäß den von der MTC-Vorrichtung berichteten Fähigkeitsinformationen, dass das Merkmal der MTC-Vorrichtung zur unveränderlichen MTC-Merkmalkategorie gehört, Nichtaktivieren des Merkmals der MTC-Vorrichtung, wenn bestimmt ist, dass eine Netzwerkeinheit das Merkmal der MTC-Vorrichtung nicht unterstützt oder die Abonnementinformationen der MTC-Vorrichtung eine Aktivierung des Merkmals der MTC-Vorrichtung verhindern, und Aktivieren des Merkmals der MTC-Vorrichtung, wenn die Netzwerkeinheit das Merkmal der MTC-Vorrichtung unterstützt und/oder die Abonnementinformationen der MTC-Vorrichtung eine Aktivierung des Merkmals der MTC-Vorrichtung zulassen; oder
das Verfahren nach dem Erhalten der Abonnementinformationen der MTC-Vorrichtung gemäß der Erkennung der MTC-Vorrichtung weiterhin umfasst:
Bestimmen gemäß den Abonnementinformationen der MTC-Vorrichtung, dass das Merkmal der MTC-Vorrichtung zur unveränderlichen MTC-Merkmalkategorie gehört, Nichtaktivieren des Merkmals der MTC-Vorrichtung, wenn bestimmt ist, dass eine Netzwerkeinheit das Merkmal der MTC-Vorrichtung nicht unterstützt oder die MTC-Vorrichtung das Merkmal der MTC-Vorrichtung nicht unterstützt, und Aktivieren des Merkmals der MTC-Vorrichtung, wenn bestimmt ist, dass die Netzwerkeinheit und die MTC-Vorrichtung das Merkmal der MTC-Vorrichtung unterstützen.

4. Verfahren nach Anspruch 1, wobei das Steuern des Zugangs der MTC-Vorrichtung gemäß mindestens einem der Abonnementinformationen der MTC-Vorrichtung, der Netzwerkfähigkeit und der Fähigkeit der MTC-Vorrichtung umfasst:
wenn bestimmt ist, dass eine Netzwerkeinheit das Merkmal der MTC-Vorrichtung nicht unterstützt oder dass die MTC-Vorrichtung das Merkmal der MTC-Vorrichtung nicht unterstützt, Nichtaktivieren des Merkmals der MTC-Vorrichtung; oder
wenn bestimmt ist, dass eine Netzwerkeinheit das Merkmal der MTC-Vorrichtung nicht unterstützt oder dass die MTC-Vorrichtung das Merkmal der MTC-Vorrichtung nicht unterstützt, und die Abonnementinformationen der MTC-Vorrichtung das Aktivieren des Merkmals der MTC-Vorrichtung anweisen, Verhindern des Zugangs der MTC-Vorrichtung zu dem Netzwerk; oder
wenn bestimmt ist, dass eine Netzwerkeinheit das Merkmal der MTC-Vorrichtung nicht unterstützt oder dass die MTC-Vorrichtung das Merkmal der MTC-Vorrichtung nicht unterstützt, und die Abonnementinformationen der MTC-Vorrichtung den Vorschlag anzeigen, dass das Merkmal der MTC-Vorrichtung aktiviert werden muss, Zulassen des Zugangs der MTC-Vorrichtung zu dem Netzwerk ohne Aktivieren des Merkmals der MTC-Vorrichtung.

5. Verfahren nach Anspruch 3 oder 4, wobei das Bestimmen, dass die Netzwerkeinheit das Merkmal der MTC-Vorrichtung nicht unterstützt, umfasst:
Bestimmen durch ein Zugangsnetzwerkelement, dass das Merkmal der MTC-Vorrichtung nicht unterstützt ist, wenn das Zugangsnetzwerkelement bestimmt, dass das Zugangsnetzwerkelement das Merkmal der MTC-Vorrichtung nicht unterstützt, oder wenn das Zugangsnetzwerkelement über eine erste Nachricht erfasst, dass ein Kernnetzwerkelement das Merkmal der MTC-Vorrichtung nicht unterstützt; oder
Bestimmen durch ein Kernnetzwerkelement, dass das Merkmal der MTC-Vorrichtung nicht unterstützt ist, wenn das Kernnetzwerkelement bestimmt, dass das Kernnetzwerkelement das Merkmal der MTC-Vorrichtung nicht unterstützt, oder wenn das Kernnetzwerkelement über eine zweite Nachricht erfasst, dass ein Zugangsnetzwerkelement das Merkmal der MTC-Vorrichtung nicht unterstützt.

6. Netzwerkeinheit, umfassend:
ein Erhaltemodul (301), das zum Erhalten eines Merkmals einer Maschinentypkommunikations(MTC)-Vorrichtung und von Merkmalkategorieinformationen des Merkmals ausgelegt ist, wobei die Merkmalkategorieinformationen des Merkmals eine unveränderliche MTC-Merkmalkategorie oder eine veränderliche MTC-Merkmalkategorie umfassen; und
eine Zugangssteuermodul (302), das zum Zulassen des Zugangs der MTC-Vorrichtung zu einem Netzwerk ausgelegt ist, wenn das Merkmal der MTC-Vorrichtung aktiviert ist, und zum Verhindern des Zugangs der MTC-Vorrichtung zu dem Netzwerk, wenn das Merkmal der MTC-Vorrichtung nicht aktiviert werden kann, wenn das vom Erhaltemodul erhaltene Merkmal der MTC-Vorrichtung zur unveränderlichen MTC-Merkmalkategorie gehört; und
Steuern des Zugangs der MTC-Vorrichtung gemäß mindestens einem von Abonnementinformationen der MTC-Vorrichtung, Netzwerkfähigkeit und Fähigkeit der MTC-Vorrichtung, wenn das vom Erhaltemodul erhaltene Merkmal der MTC-Vorrichtung zur veränderlichen MTC-Merkmalkategorie gehört.

7. Netzwerkeinheit nach Anspruch 6, wobei das Erhaltemodul (301) eine Empfangseinheit und/oder eine Erhalteeinheit umfasst; wobei
die Empfangseinheit zum Empfangen der von der MTC-Vorrichtung berichteten Fähigkeitsinformationen ausgelegt ist, wobei die Fähigkeitsinformationen das Merkmal der MTC-Vorrichtung und die Merkmalkategorieinformationen des Merkmals umfassen; und/oder
die Erhalteeinheit zum Erhalten einer Kennung der MTC-Vorrichtung und Erhalten von Abonnementinformationen der MTC-Vorrichtung gemäß der Kennung der MTC-Vorrichtung ausgelegt ist, wobei die Abonnementinformationen das Merkmal der MTC-Vorrichtung und die Merkmalkategorieinformationen des Merkmals umfassen.

8. Netzwerkeinheit nach Anspruch 7, weiterhin umfassend ein Bestimmungsmodul;
wobei
das Bestimmungsmodul zum Bestimmen gemäß den von der MTC-Vorrichtung berichteten und von der Empfangseinheit empfangenen Fähigkeitsinformationen ausgelegt ist, dass das Merkmal der MTC-Vorrichtung zur unveränderlichen MTC-Merkmalkategorie gehört, und wenn bestimmt ist, dass die Netzwerkeinheit das Merkmal der MTC-Vorrichtung nicht unterstützt oder dass die Abonnementinformationen der MTC-Vorrichtung die Aktivierung des Merkmals der MTC-Vorrichtung verhindern, Senden erster Auslöseinformationen an das Zugangssteuermodul;
das Zugangssteuermodul zum Empfangen der ersten vom Bestimmungsmodul gesendeten Auslöseinformationen und zum Verhindern des Zugangs der MTC-Vorrichtung auf das Netzwerk ohne Aktivieren des Merkmals der MTC-Vorrichtung ausgelegt ist;
das Bestimmungsmodul ferner zum Bestimmen gemäß den von der MTC-Vorrichtung berichteten und von der Empfangseinheit empfangenen Fähigkeitsinformationen ausgelegt ist, dass das Merkmal der MTC-Vorrichtung zur unveränderlichen MTC-Merkmalkategorie gehört, und wenn bestimmt ist, dass die Netzwerkeinheit das Merkmal der MTC-Vorrichtung unterstützt und/oder dass die Abonnementinformationen der MTC-Vorrichtung die Aktivierung des Merkmals der MTC-Vorrichtung zulassen, Senden zweiter Auslöseinformationen an das Zugangssteuermodul;
das Zugangssteuermodul zum Empfangen der zweiten vom Bestimmungsmodul gesendeten Auslöseinformationen, zum Aktivieren des Merkmals der MTC-Vorrichtung und zum Zulassen des Zugangs der MTC-Vorrichtung auf das Netzwerk ausgelegt ist; oder
das Bestimmungsmodul zum Bestimmen gemäß den Abonnementinformationen der MTC-Vorrichtung, wobei die Abonnementinformationen der MTC-Vorrichtungen von dem Erhaltemodul erhalten werden, ausgelegt ist, dass das Merkmal der MTC-Vorrichtung zur unveränderlichen MTC-Merkmalkategorie gehört, und wenn bestimmt ist, dass die Netzwerkeinheit das Merkmal der MTC-Vorrichtung nicht unterstützt oder dass die MTC-Vorrichtung das Merkmal der MTC-Vorrichtung nicht unterstützt, Senden dritter Auslöseinformationen an das Zugangssteuermodul;
das Zugangssteuermodul zum Empfangen der dritten vom Bestimmungsmodul gesendeten Auslöseinformationen und zum Verhindern des Zugangs der MTC-Vorrichtung auf das Netzwerk ohne Aktivieren des Merkmals der MTC-Vorrichtung ausgelegt ist;
das Bestimmungsmodul ferner zum Bestimmen gemäß den Abonnementinformationen der MTC-Vorrichtung, wobei die Abonnementinformationen der MTC-Vorrichtungen von dem Erhaltemodul erhalten werden, ausgelegt ist, dass das Merkmal der MTC-Vorrichtung zur unveränderlichen MTC-Merkmalkategorie gehört, und wenn bestimmt ist, dass die Netzwerkeinheit und die MTC-Vorrichtung das Merkmal der MTC-Vorrichtung unterstützen, Senden vierter Auslöseinformationen an das Zugangssteuermodul;
das Zugangssteuermodul zum Empfangen der vierten vom Bestimmungsmodul gesendeten Auslöseinformationen, zum Aktivieren des Merkmals der MTC-Vorrichtung und zum Zulassen des Zugangs der MTC-Vorrichtung auf das Netzwerk ausgelegt ist.

9. Ein Zugangssteuersystem, umfassend: ein netzwerkseitiges Netzwerkelement (401) und eine Maschinentypkommunikations(MTC)-Vorrichtung (402), die mit dem netzwerkseitigen Netzwerkelement kommunikationsfähig verbunden ist; wobei
das netzwerkseitige Netzwerkelement (401) zum Erhalten eines Merkmals der MTC-Vorrichtung und von Merkmalkategorieinformationen des Merkmals ausgelegt ist, wobei die Merkmalkategorieinformationen des Merkmals eine unveränderliche MTC-Merkmalkategorie oder eine veränderliche MTC-Merkmalkategorie umfassen; wenn das Merkmal der MTC-Vorrichtung zur unveränderlichen MTC-Merkmalkategorie gehört, Zulassen des Zugangs der MTC-Vorrichtung auf ein Netzwerk beim Aktivieren des Merkmals der MTC-Vorrichtung, und Verhindern des Zugangs der MTC-Vorrichtung (402) auf das Netzwerk, wenn das Merkmal der MTC-Vorrichtung nicht aktiviert werden kann; und
wenn das Merkmal der MTC-Vorrichtung zur veränderlichen MTC-Merkmalkategorie gehört, Steuern des Zugangs der MTC-Vorrichtung (402) gemäß mindestens einem von Abonnementinformationen der MTC-Vorrichtung, Netzwerkfähigkeit und Fähigkeit der MTC-Vorrichtung.

10. System nach Anspruch 9, wobei das netzwerkseitige Netzwerkelement ein Zugangsnetzwerkelement und ein Kernnetzwerkelement umfasst; wobei
das Zugangsnetzwerkelement zum Bestimmen ausgelegt ist, dass das Merkmal der MTC-Vorrichtung nicht unterstützt ist, um so das Nichtaktivieren des Merkmals der MTC-Vorrichtung und das Verhindern des Zugangs der MTC-Vorrichtung auf das Netzwerk zu bestimmen, wenn das Zugangsnetzwerkelement bestimmt, dass das Zugangsnetzwerkelement das Merkmal der MTC-Vorrichtung nicht unterstützt, oder wenn das Zugangsnetzwerkelement über eine erste Nachricht erfasst, dass ein Kernnetzwerkelement das Merkmal der MTC-Vorrichtung nicht unterstützt; oder
das Kernnetzwerkelement zum Bestimmen ausgelegt ist, dass das Merkmal der MTC-Vorrichtung nicht unterstützt ist, um so das Nichtaktivieren des Merkmals der MTC-Vorrichtung und das Verhindern des Zugangs der MTC-Vorrichtung auf das Netzwerk zu bestimmen, wenn das Kernnetzwerkelement bestimmt, dass das Kernnetzwerkelement das Merkmal der MTC-Vorrichtung nicht unterstützt, oder wenn das Kernnetzwerkelement über eine zweite Nachricht erfasst, dass das Zugangsnetzwerkelement das Merkmal der MTC-Vorrichtung nicht unterstützt.

## Revendications

1. Procédé de contrôle d'accès, consistant à :
obtenir (101) un attribut d'un dispositif de communication de type machine (MTC) et une information de catégorie d'attribut de l'attribut, l'information de catégorie d'attribut de l'attribut comprenant une catégorie d'attribut MTC fixe et une catégorie d'attribut MTC flexible ;
si (102) l'attribut du dispositif MTC appartient à la catégorie d'attribut MTC fixe, autoriser l'accès du dispositif MTC à un réseau quand l'attribut du dispositif MTC est activé, ou refuser l'accès du dispositif MTC au réseau quand l'attribut du dispositif MTC ne peut pas être activé ; et
si (102) l'attribut du dispositif MTC appartient à la catégorie d'attribut MTC flexible, contrôler l'accès du dispositif MTC selon une information d'abonnement du dispositif MTC, une capacité de réseau et/ou une capacité de dispositif MTC.

2. Procédé selon la revendication 1, dans lequel l'obtention de l'attribut du dispositif MTC et de l'information de catégorie d'attribut de l'attribut consiste à :
recevoir une information de capacité signalée par le dispositif MTC, l'information de capacité comprenant l'attribut du dispositif MTC et l'information de catégorie d'attribut de l'attribut ; ou
obtenir un identifiant du dispositif MTC, et obtenir une information d'abonnement du dispositif MTC selon l'identifiant du dispositif MTC, l'information d'abonnement comprenant l'attribut du dispositif MTC et l'information de catégorie d'attribut de l'attribut.

3. Procédé selon la revendication 2, le procédé consistant en outre, après la réception de l'information de capacité signalée par le dispositif MTC, à :
déterminer, selon l'information de capacité signalée par le dispositif MTC, que l'attribut du dispositif MTC appartient à la catégorie d'attribut MTC fixe, ne pas activer l'attribut du dispositif MTC quand il est déterminé qu'une entité de réseau ne prend pas en charge l'attribut du dispositif MTC ou que l'information d'abonnement du dispositif MTC interdit l'activation de l'attribut du dispositif MTC, et activer l'attribut du dispositif MTC quand l'entité de réseau prend en charge l'attribut du dispositif MTC et/ou que l'information d'abonnement du dispositif MTC autorise l'activation de l'attribut du dispositif MTC ; ou
le procédé consistant en outre, après l'obtention de l'information d'abonnement du dispositif MTC selon l'identifiant du dispositif MTC, à :
déterminer, selon l'information d'abonnement du dispositif MTC, que l'attribut du dispositif MTC appartient à la catégorie d'attribut MTC fixe, ne pas activer l'attribut du dispositif MTC quand il est déterminé qu'une entité de réseau ne prend pas en charge l'attribut du dispositif MTC ou que le dispositif MTC ne prend pas en charge l'attribut du dispositif MTC, et activer l'attribut du dispositif MTC quand il est déterminé que l'entité de réseau et le dispositif MTC prennent en charge l'attribut du dispositif MTC.

4. Procédé selon la revendication 1, dans lequel le contrôle de l'accès du dispositif MTC selon l'information d'abonnement du dispositif MTC, la capacité de réseau et/ou la capacité de dispositif MTC, consiste à :
quand il est déterminé qu'une entité de réseau ne prend pas en charge l'attribut du dispositif MTC ou que le dispositif MTC ne prend pas en charge l'attribut du dispositif MTC, ne pas activer l'attribut du dispositif MTC ; ou
quand il est déterminé qu'une entité de réseau ne prend pas en charge l'attribut du dispositif MTC ou que le dispositif MTC ne prend pas en charge l'attribut du dispositif MTC, et que l'information d'abonnement du dispositif MTC donne l'instruction d'activer l'attribut du dispositif MTC, refuser l'accès du dispositif MTC au réseau ; ou
quand il est déterminé qu'une entité de réseau ne prend pas en charge l'attribut du dispositif MTC ou que le dispositif MTC ne prend pas en charge l'attribut du dispositif MTC, et que l'information d'abonnement du dispositif MTC indique qu'il est suggéré que l'attribut du dispositif MTC doit être activé, autoriser l'accès du dispositif MTC au réseau sans activer l'attribut du dispositif MTC.

5. Procédé selon la revendication 3 ou 4, dans lequel la détermination du fait que l'entité de réseau ne prend pas en charge l'attribut du dispositif MTC consiste à :
déterminer, par un élément de réseau d'accès, que l'attribut du dispositif MTC n'est pas pris en charge, quand l'élément de réseau d'accès détermine que l'élément de réseau d'accès ne prend pas en charge l'attribut du dispositif MTC, ou l'élément de réseau d'accès apprend, par l'intermédiaire d'un premier message, qu'un élément de réseau central ne prend pas en charge l'attribut du dispositif MTC ; ou
déterminer, par un élément de réseau central, que l'attribut du dispositif MTC n'est pas pris en charge, quand l'élément de réseau central détermine que l'élément de réseau central ne prend pas en charge l'attribut du dispositif MTC, ou l'élément de réseau central apprend, par l'intermédiaire d'un second message, qu'un élément de réseau d'accès ne prend pas en charge l'attribut du dispositif MTC.

6. Entité de réseau, comprenant :
un module d'obtention (301), configuré pour obtenir un attribut d'un dispositif de communication de type machine (MTC) et une information de catégorie d'attribut de l'attribut, l'information de catégorie d'attribut de l'attribut comprenant une catégorie d'attribut MTC fixe et une catégorie d'attribut MTC flexible ; et
un module de contrôle d'accès (302), configuré pour autoriser l'accès du dispositif MTC à un réseau quand l'attribut du dispositif MTC est activé, et refuser l'accès du dispositif MTC au réseau quand l'attribut du dispositif MTC ne peut pas être activé si l'attribut du dispositif MTC obtenu par le module d'obtention appartient à la catégorie d'attribut MTC fixe, et
contrôler l'accès du dispositif MTC selon une information d'abonnement du dispositif MTC, une capacité de réseau et/ou une capacité de dispositif MTC si l'attribut du dispositif MTC obtenu par le module d'obtention appartient à la catégorie d'attribut MTC flexible.

7. Entité de réseau selon la revendication 6, dans lequel le module d'obtention (301) comprend une unité de réception et/ou une unité d'obtention,
l'unité de réception étant configurée pour recevoir une information de capacité signalée par le dispositif MTC, l'information de capacité comprenant l'attribut du dispositif MTC et l'information de catégorie d'attribut de l'attribut ; et/ou
l'unité d'obtention étant configurée pour obtenir un identifiant du dispositif MTC, et obtenir une information d'abonnement du dispositif MTC selon l'identifiant du dispositif MTC, l'information d'abonnement comprenant l'attribut du dispositif MTC et l'information de catégorie d'attribut de l'attribut.

8. Entité de réseau selon la revendication 7, comprenant en outre un module de détermination,
le module de détermination étant configuré pour déterminer, selon l'information de capacité signalée par le dispositif MTC et reçue par l'unité de réception, que l'attribut du dispositif MTC appartient à la catégorie d'attribut MTC fixe, et quand il est déterminé que l'entité de réseau ne prend pas en charge l'attribut du dispositif MTC ou que l'information d'abonnement du dispositif MTC interdit l'activation de l'attribut du dispositif MTC, envoyer une première information de déclenchement au module de contrôle d'accès ;
le module de contrôle d'accès étant configuré pour recevoir la première information de déclenchement envoyée par le module de détermination, et refuser l'accès du dispositif MTC au réseau sans activer l'attribut du dispositif MTC ;
le module de détermination étant en outre configuré pour déterminer, selon l'information de capacité signalée par le dispositif MTC et reçue par l'unité de réception, que l'attribut du dispositif MTC appartient à la catégorie d'attribut MTC fixe, et quand il est déterminé que l'entité de réseau prend en charge l'attribut du dispositif MTC et/ou que l'information d'abonnement du dispositif MTC autorise l'activation de l'attribut du dispositif MTC, envoyer une deuxième information de déclenchement au module de contrôle d'accès ;
le module de contrôle d'accès étant configuré pour recevoir la deuxième information de déclenchement envoyée par le module de détermination, activer l'attribut du dispositif MTC, et autoriser l'accès du dispositif MTC au réseau ; ou
le module de détermination étant configuré pour déterminer, selon l'information d'abonnement du dispositif MTC, l'information d'abonnement du dispositif MTC étant obtenue par l'unité d'obtention, que l'attribut du dispositif MTC appartient à la catégorie d'attribut MTC fixe, et quand il est déterminé que l'entité de réseau ne prend pas en charge l'attribut du dispositif MTC ou que le dispositif MTC ne prend pas en charge l'attribut du dispositif MTC, envoyer une troisième information de déclenchement au module de contrôle d'accès ;
le module de contrôle d'accès étant configuré pour recevoir la troisième information de déclenchement envoyée par le module de détermination, et refuser l'accès du dispositif MTC au réseau sans activer l'attribut du dispositif MTC ;
le module de détermination étant en outre configuré pour déterminer, selon l'information d'abonnement du dispositif MTC, l'information d'abonnement du dispositif MTC étant obtenue par l'unité d'obtention, que l'attribut du dispositif MTC appartient à la catégorie d'attribut MTC fixe, et quand il est déterminé que l'entité de réseau et le dispositif MTC prennent en charge l'attribut du dispositif MTC, envoyer une quatrième information de déclenchement au module de contrôle d'accès ;
le module de contrôle d'accès étant configuré pour recevoir la quatrième information de déclenchement envoyée par le module de détermination, activer l'attribut du dispositif MTC, et autoriser l'accès du dispositif MTC au réseau.

9. Système de contrôle d'accès, comprenant : un élément de réseau côté réseau (401) et un dispositif de communication de type machine (MTC) (402) qui est connecté à
l'élément de réseau côté réseau de manière communicative,
l'élément de réseau côté réseau (401) étant configuré pour obtenir un attribut du dispositif MTC et une information de catégorie d'attribut de l'attribut, l'information de catégorie d'attribut de l'attribut comprenant une catégorie d'attribut MTC fixe et une catégorie d'attribut MTC flexible ;
si l'attribut du dispositif MTC appartient à la catégorie d'attribut MTC fixe, autoriser l'accès du dispositif MTC à un réseau quand l'attribut du dispositif MTC est activé, et refuser l'accès du dispositif MTC (402) au réseau quand l'attribut du dispositif MTC ne peut pas être activé ; et
si l'attribut du dispositif MTC appartient à la catégorie d'attribut MTC flexible, contrôler l'accès du dispositif MTC (402) selon une information d'abonnement du dispositif MTC, une capacité de réseau et/ou une capacité de dispositif MTC.

10. Système selon la revendication 9, dans lequel l'élément de réseau côté réseau comprend un élément de réseau d'accès et un élément de réseau central,
l'élément de réseau d'accès étant configuré pour déterminer que l'attribut du dispositif MTC n'est pas pris en charge, de manière à déterminer qu'il ne faut pas activer l'attribut du dispositif MTC et qu'il faut refuser l'accès du dispositif MTC au réseau, quand l'élément de réseau d'accès détermine que l'élément de réseau d'accès ne prend pas en charge l'attribut du dispositif MTC, ou l'élément de réseau d'accès apprend, par l'intermédiaire d'un premier message, que l'élément de réseau central ne prend pas en charge l'attribut du dispositif MTC ; ou
l'élément de réseau central étant configuré pour déterminer que l'attribut du dispositif MTC n'est pas pris en charge, de manière à déterminer qu'il ne faut pas activer l'attribut du dispositif MTC et qu'il faut refuser l'accès du dispositif MTC au réseau, quand l'élément de réseau central détermine que l'élément de réseau central ne prend pas en charge l'attribut du dispositif MTC, ou l'élément de réseau central apprend, par l'intermédiaire d'un second message, que l'élément de réseau d'accès ne prend pas en charge l'attribut du dispositif MTC.
